# EUROPÄISCHE PATENTSCHRIFT

(11) **EP 3 050 150 B1**
(45) Veröffentlichungstag und Bekanntmachung des Hinweises auf die Patenterteilung: **01.11.2017**
(21) Anmeldenummer: 14781480.0
(22) Anmeldetag: 23.09.2014
(51) Int. Cl.: H01M 8/1004, H01M 8/241, H01M 8/2475, H01M 8/0247, H01M 8/22, H01M 8/0271, H01M 4/86, H01M 4/92, H01M 8/1011, H01M 8/1018, H01M 8/00

(54) **BRENNSTOFFZELLE**
FUEL CELL
PILE À COMBUSTIBLE

(30) Priorität: 23.09.2013 DE 102013015876
(43) Veröffentlichungstag der Anmeldung: 03.08.2016
(73) Patentinhaber: Fresenius Medical Care Deutschland GmbH, 61352 Bad Homburg (DE)
(72) Erfinder: HEIDE, Alexander, 65817 Eppstein (DE)
(74) Vertreter: Oppermann, Frank
(86) Internationale Anmeldenummer: PCT/EP2014/070190
(87) Internationale Veröffentlichungsnummer: WO 2015/040233

(56) Entgegenhaltungen:
- JP-A- 2007 194 205
- US-A- 3 228 797
- US-A1- 2011 200 912

## Beschreibung

Die Erfindung betrifft eine Brennstoffzelle und ein Verfahren zur Herstellung einer Brennstoffzelle aus einem Hohlfasermembran-Modul.

Zur Erzeugung elektrischer Energie sind Brennstoffzellen bekannt, die chemische Reaktionsenergie eines kontinuierlich zugeführten Brennstoffes und eines Oxidationsmittels in elektrische Energie wandeln.

Es sind verschiedene Brennstoffzellentypen bekannt. Die bekanntesten Brennstoffzellen sind Wasserstoff- und Methanol-Brennstoffzellen. Bei der Direktmethanol-Brennstoffzelle (DMCF), die sich durch eine relativ geringe Wärmeentwicklung auszeichnet, findet als Brennstoff Methanol Verwendung.

Die Brennstoffzelle verfügt über zwei Elektrodenplatten, die durch eine semipermeable Membran getrennt sind. Eine Elektrodenplatte bildet eine Anode, während die andere Elektrodenplatte eine Kathode bildet. Die Anode und Kathode sind mit einem Katalysator beschichtet. Am Katalysator der Anodenseite wird Methanol zu Kohlendioxid oxidiert und am Katalysator der Kathodenseite wird Sauerstoff als Oxydationsmittel absorbiert und zu Wasser reduziert. Dabei werden Protonen durch die semipermeable Membran transportiert und Elektronen über einen Stromkreis geleitet, so dass elektrische Energie erzeugt wird.

Mit einer einzelnen Brennstoffzelle können nur elektrische Spannungen in einem Bereich von 1 bis 1,2 V erzeugt werden. Daher werden mehrere Einzelzellen in einem Stapel angeordnet. Diese Bauweise zeichnet sich aber im Verhältnis zu der Größe der Membranoberfläche, die für den Protonentransport und somit für die Gesamtleistung der Brennstoffzelle ausschlaggebend ist, durch relativ große Abmessungen und ein relativ hohes Gewicht aus.

Aus der DE 199 51 687 A1 ist eine Brennstoffzelle mit mehreren, von einer Polymerelektrolytmembran getrennten Reaktionskammern bekannt, in denen wechselweise elektrische Leiter unterschiedlicher Polarität angeordnet sind. Bei der Brennstoffzelle wird die semipermeable Membran aus einem Bündel von Membran-Hohlfasern gebildet, wobei innerhalb und außerhalb der Membran-Hohlfasern jeweils elektrische Leiter gleicher Polarität vorgesehen sind, die jeweils unter Bildung einer Kathode und einer Anode miteinander elektrisch verbunden sind.

Die 199 51 687 A1 schlägt vor, innerhalb und außerhalb der Hohlfasermembranen als Anode bzw. Kathode elektrische Leiter vorzusehen, die aus dünnen Folien oder Fäden aus einem leitfähigen Material bestehen. Sämtliche elektrischen Leiter sind miteinander verbunden, so dass sie eine gemeinsame Anode bzw. Kathode bilden. Brennstoffzellen mit Hohlfasermembranen werden auch in JP 2007 194205 A und US 3 228 797 A beschrieben. Der Erfindung liegt die Aufgabe zu Grunde, eine Brennstoffzelle der oben genannten Art, die sich durch eine hohe Leistungsdichte und eine kompakte Bauweise bei verringertem Gewicht auszeichnet, auf einfache Weise kostengünstig herzustellen.

Die Lösung dieser Aufgabe erfolgt erfindungsgemäß mit den Merkmalen der unabhängigen Patentansprüche. Die Gegenstände der abhängigen Ansprüche betreffen bevorzugte Ausführungsformen der Erfindung.

Die erfindungsgemäße Brennstoffzelle verfügt über ein Gehäuse, in dem ein Bündel aus Hohlfasermembranen angeordnet ist.

Das von dem Gehäuse eingeschlossene Volumen wird von einer den einen endseitigen Abschnitt des Bündels aus Hohlfasermembranen dicht umschließenden Trennwand und einer den anderen endseitigen Abschnitt des Bündels aus Hohlfasermembranen dicht umschließenden Trennwand in einen Einlassraum, einen Zwischenraum und einen Auslassraum unterteilt. Der Einlassraum steht mit den einen offenen Enden der Hohlfasermembranen in Fluidverbindung, während der Auslassraum mit den anderen offenen Enden der Hohlfasermembranen in Fluidverbindung steht.

Die Innenseite und die Außenseite der Hohlfasermembranen weisen mindestens eine Schicht umfassend ein Katalysatormaterial und ein elektrisch leitendes Material auf. Die Innenseite der Hohlfasermembranen und die Außenseite der Hohlfasermembranen können mit einer Schicht aus einem Katalysatormaterial beschichtet sein, und die Schicht aus dem Katalysatormaterial mit einer Schicht aus einem elektrisch leitenden Material beschichtet sein. Es ist aber auch möglich, dass ein Material mit beiden Eigenschaften in einer einzigen Schicht aufgebracht wird. Beispielsweise kann eine gesonderte elektrisch leitende Schicht entfallen, wenn das Katalysatormaterial selbst leitend ist.

An dem Einlassraum befindet sich ein Einlass-Anschluss und an dem Auslassraum ein Auslass-Anschluss, während an dem Zwischenraum ein Einlass-Anschluss und ein Auslass-Anschluss vorgesehen ist.

Der Einlass- und Auslassraum stehen über die Hohlräume der Hohlfasern in Fluidverbindung, so dass ein Medium von dem Einlass-Anschluss durch die Hohlräume der Hohlfasern zu dem Auslass-Anschluss strömen kann. Ein Medium, das über den Einlass-Anschluss des Zwischenraums zuströmt und über den Auslass-Anschluss des Zwischenraums abströmt, kann die Hohlfasern umströmen.

Die erfindungsgemäße Brennstoffzelle zeichnet sich durch eine vereinfachte elektrische Verbindung sämtlicher elektrischer die Anode und Kathode bildenden Leiter aus. Dadurch kann die Brennstoffzelle in hohen Stückzahlen kostengünstig hergestellt werden.

Die Verbindung der die Anode und Kathode bildenden Beschichtungen aus einem elektrisch leitenden Material an der Innen- und Außenseite der Hohlfasermembranen erfolgt durch eine Beschichtung der Wandung des Gehäuses bzw. der beiden Trennwände, die den Einlass- und Auslassraum sowie den Zwischenraum begrenzen, mit einem elektrisch leitenden Material.

Für den elektrischen Anschluss der Anode bzw. Kathode sind an dem Gehäuse elektrische Anschlusskontakte ausgebildet, die mit der jeweiligen Schicht aus elektrisch leitendem Material in dem Einlass- und Auslassraum sowie dem Zwischenraum elektrisch verbunden sind. Die elektrische Kontaktierung kann beispielsweise auf einfache Weise an dem Einlass- und Auslass-Anschluss des Gehäuses erfolgen, der an der Innenseite mit dem elektrisch leitenden Material beschichtet ist.

Die Schichten aus leitfähigem Material können direkt auf die Oberflächen der Gehäusewandung und der Trennwände aufgebracht sein. Aus fertigungstechnischen Gründen ist es aber von Vorteil, wenn die Schichten aus leitfähigem Material auf eine an den Oberflächen der Gehäusewandung und der Trennwände bereits befindliche Schicht aus einem Katalysatormaterial aufgebracht wird, obwohl die Schicht aus Katalysatormaterial außerhalb der Oberflächen an der Innen- und Außenseite der Hohlfasermembranen für die Funktion der Brennstoffzelle nicht erforderlich ist.

Das erfindungsgemäße Verfahren zur Herstellung einer Brennstoffzelle zeichnet sich dadurch aus, dass die elektrische Verbindung der einzelnen, die Anode bzw. Kathode bildenden Schichten an der Innen- und Außenseite der Hohlfasermembranen durch das Aufbringen einer Schicht aus einem leitfähigen Material geschaffen wird.

Die beiden Schichten werden vorteilhafterweise dadurch aufgebracht, dass zuerst eine mit Katalysatormaterial beladene Flüssigkeit und anschließend eine mit einem elektrisch leitfähigen Material beladene Flüssigkeit einerseits durch den ersten und zweiten Einlassraum und die Hohlfasermembranen und andererseits durch den Zwischenraum gepumpt werden.

Ein besonderer Aspekt der Erfindung liegt in der Verwendung eines Dialysator-Moduls als Hohlfasermembran-Modul zur Herstellung der Brennstoffzelle.

Die in der Medizintechnik (Dialyse) eingesetzten Dialysator-Module verfügen über ein Bündel von Hohlfasermembranen, die grundsätzlich für eine Brennstoffzelle geeignet sind. Die Erfindung schlägt daher vor, die (gebrauchten) Dialysatoren einem neuen Verwendungszweck zuzuführen.

Die Herstellung von Brennstoffzellen aus Dialysator-Hohlfasermembran-Modulen erfordert grundsätzlich nur eine Beschichtung mit einem Katalysatormaterial und eine Beschichtung mit einem leitfähigen Material oder das Aufbringen einer Beschichtung, die gleichsam als Katalysator und Leiter fungiert. Das Gehäuse mit den Anschlüssen zum Zu- und Abführen der Medien sind bereits bei dem Dialysator-Modul vorhanden.

Eine derartige, aus einem Dialysator-Modul hergestellte Brennstoffzelle hat einen kompakten Aufbau bei einem geringen Gewicht, so dass die Brennstoffzelle universell einsetzbar ist.

Anstelle einer Beschichtung der Innen- und Außenseite der Hohlfasermembranen mit materialbeladenen Flüssigkeiten können auch Bündel von Hohlfasermembranen eingesetzt werden, deren Hohlfasern bereits über zumindest eine der beiden Materialschichten verfügen. Derartige mehrlagige Hohlfasern können in einem Extrusionsverfahren hergestellt werden. Die elektrische Verbindung sämtlicher Leiter erfolgt aber auch dann durch eine Schicht aus einem leitfähigen Material in dem Einlass- bzw. Auslassraum sowie dem Zwischenraum, in dem die jeweiligen Enden der Hohlfasermembran in Fluidverbindung stehen.

Bei einer bevorzugten Ausführungsform der Erfindung ist das Gehäuse der Brennstoffzelle ein zylindrisches Gehäuse, wobei die erste und zweite Trennwand zylindrische Körper sind. Daraus ergibt sich eine kompakte und einfache Bauweise, bei der die Abdichtung der Trennwand gegenüber der Gehäusewand besonders einfach ist. Vorzugsweise besteht die erste und zweite Trennwand aus einer Vergussmasse.

Das Katalysatormaterial ist vorzugsweise Platin oder Palladium. Es können aber auch andere Katalysatormaterialien verwendet werden. Die Schichtdicke der Schicht aus dem Katalysatormaterial liegt vorzugsweise zwischen 2 nm und 500 nm. Der Durchmesser der Hohlfasermembranen liegt vorzugsweise zwischen 50µm und 500µm.

Das leitfähige Material enthält vorzugsweise Kohlenstoff-Partikel oder Kohlenstoff-Fasern. Das leitfähige Material kann aber auch andere leitfähige Partikel oder Fasern enthalten. Grundsätzlich kommen alle leitfähigen Materialien in Frage, beispielsweise Metalle oder leitfähige Polymere oder Keramiken.

Wenn ein Dialysator-Modul als Hohlfasermembran-Modul für die Herstellung einer Brennstoffzelle verwendet wird, werden die in den Hohlfasermembranen des Dialysator-Moduls vorhandenen Poren vorzugsweise mit einem ionenleitenden Material verfüllt. Diese Verfüllung kann mit einem mit Polysulfon benetzten Kleber erfolgen.

Im Folgenden wird ein Ausführungsbeispiel der Erfindung unter Bezugnahme auf die Zeichnungen näher erläutert.

Es zeigen:
- Fig. 1: ein Ausführungsbeispiel der erfindungsgemäßen Brennstoffzelle in vereinfachter schematischer Darstellung,
- Fig. 2: eine vergrößerte Darstellung des endseitigen Abschnitts einer Hohlfasermembran im Bereich des Ausschnitts A der Trennwand des Gehäuses der Brennstoffzelle und
- Fig. 3: den Ausschnitt B von Fig. 1 in vergrößerter Darstellung.

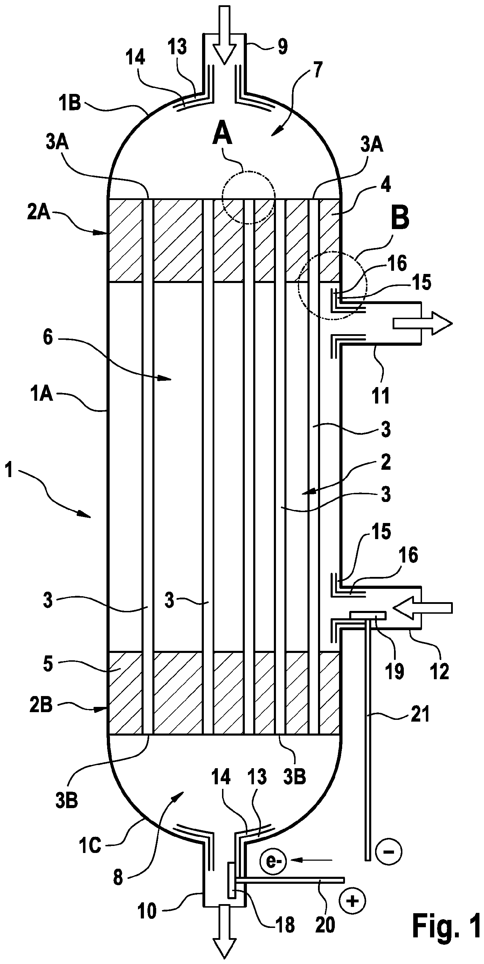

Die erfindungsgemäße Brennstoffzelle kann aus einem Dialysator-Modul hergestellt werden. Fig. 1 zeigt in vereinfachter schematischer Darstellung eine aus einem Dialysator-Modul hergestellte Brennstoffzelle.

Nachfolgend wird zunächst der Aufbau des Dialysator-Moduls beschrieben. Das Dialysator-Modul weist ein langgestrecktes Gehäuse 1 mit einem hohlzylindrischen Gehäuseteil 1A und zwei Endstücken 1B und 1C auf, die das hohlzylindrische Gehäuseteil 1A an beiden Enden dicht verschließen.

In dem hohlzylindrischen Teil 1A des Gehäuses 1 ist ein Bündel 2 von Hohlfasermembranen 3 angeordnet. Die Hohlfasermembranen 3, die jeweils an den Enden offen sind, erstrecken sich parallel zur Längsrichtung des Gehäuses 1.

Die Holfasermembranen können aus Polysulfonen (PSU), Polyimiden (PI), Poly(etheretherketonen) (PEEK), Polyethersulfone (PES) u.a. bestehen.

Der eine endseitige Abschnitt 2A des Bündels 2 aus Hohlfasermembranen 3 wird von einer ersten plattenförmigen Trennwand 4 dicht umschlossen, die dicht in dem einen Endstück 1B des hohlzylindrischen Gehäuseteils 1A sitzt, während der andere endseitige Abschnitt 2B des Hohlfasermembran-Bündels 2 von einer zweiten Trennwand 5 dicht umschlossen wird, die dicht in dem anderen Endstück 1C des hohlzylindrischen Gehäuseteils 1A sitzt. Die beiden Trennwände 4 und 5 bestehen aus einer Vergussmasse, die vorzugsweise Polyurethan ist.

Zwischen den beiden Trennwänden 4, 5 befindet sich ein Zwischenraum 6, durch den sich die Hohlfasermembranen 3 erstrecken.

Die Wandung des einen Endstücks 1B des Gehäuses 1 begrenzt zusammen mit der Außenseite der Trennwand 4 einen Einlass-Raum 7, während das andere Endstück 1C des Gehäuses zusammen mit der Außenseite der zweiten Trennwand 5 einen Auslass-Raum 8 begrenzt. Damit stehen die offenen Enden 3A und 3B der Hohlfasermembranen 3 jeweils über den Einlass- bzw. Auslassraum in Strömungsverbindung.

An dem einen Endstück 1B ist ein Einlass-Anschluss 9 und an dem anderen Endstück 1C des Gehäuses 1 ist ein Auslass-Anschluss 10 vorgesehen. An dem hohlzylindrischen Gehäuseteil 1A befindet sich neben der einen Trennwand 4 ein Auslass-Anschluss 11 und neben der anderen Trennwand 5 ein Einlass-Anschluss 12. Wenn die Brennstoffzelle nicht im Gegenstrom, sondern im Gleichstrom betrieben wird, ist die Position des Einlass- und Auslass-Anschlusses des Zwischenraums umgekehrt.

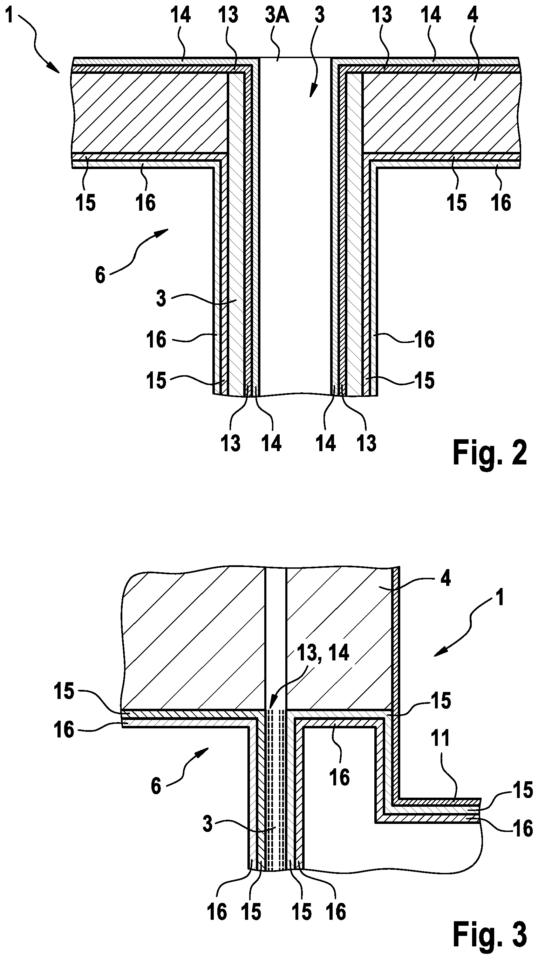

Die Innenseite der Hohlfasermembranen 3 ist mit einer Schicht 13 aus einem Katalysatormaterial beschichtet. Als Katalysatormaterialien können Platin oder Palladium oder deren Legierungen verwendet werden. Auf die Schicht 13 aus einem Katalysatormaterial ist eine Schicht 14 aus einem leitfähigen Material aufgebracht, das Kohlenstoff-Partikel oder Kohlenstoff-Fasern enthalten kann (Fig. 2 und Fig. 3). Auf die Innenseite der Hohlfasermembranen 3 kann aber auch eine einzige Schicht aufgebracht werden, die als Katalysator und Leiter fungiert.

Auf die Außenseite der Hohlfasermembranen 3 ist ebenfalls eine Schicht 15 aus einem Katalysatormaterial und auf die Schicht aus dem Katalysatormaterial eine Schicht 16 aus einem leitfähigen Material aufgebracht (Fig. 2 und Fig. 3). Diese beiden Schichten 15 und 16 erstrecken sich nicht nur entlang der Außenseite der Hohlfasermembranen, sondern über die gesamte Wandung des hohlzylindrischen Gehäuseteils 1A und die Innenseiten der beiden Trennwände 4 und 5, die den Zwischenraum 6 begrenzen. Vorzugsweise erstrecken sich die beiden Schichten 15, 16 auch in den Einlass- und Auslass-Anschluss 11 und 12, die als einstückiger Teil des Gehäuses ausgebildet sind. Auf die Außenseite der Hohlfasermembranen 3 kann aber auch eine einzige Schicht aufgebracht werden, die als Katalysator und Leiter fungiert.

Die den Einlass-Raum 7 begrenzende Wandung des einen Endstücks 1B und die Außenseite der einen Trennwand 4 und die Wandung des den Auslass-Raum 8 begrenzenden Endstücks 1C und die Außenseite der anderen Trennwand 5 sind ebenfalls mit einer Schicht 14 aus einem leitfähigen Material beschichtet. Die Schicht 14 aus leitfähigem Material kann auch auf eine Schicht 13 aus einem Katalysatormaterial aufgebracht sein, mit der die Wandung der Endstücke 1B und 1C und die Außenseiten der Trennwände 4 und 5 beschichtet ist. Dies kann aus fertigungstechnischen Gründen von Vorteil sein, wie nachfolgend noch erläutert wird. Auch hier kann nur eine einzige Schicht vorgesehen sein, die sowohl als Katalysator und als auch als Leiter fungieren kann.

Die elektrisch leitende Schicht 14 in dem Einlass- und Auslass-Raum 7, 8 schafft eine elektrische Verbindung zwischen den elektrisch leitenden Schichten 14 an der Innenseite der Hohlfasermembranen 3, während die elektrisch leitende Schicht 16 in dem Zwischenraum 6 eine elektrische Verbindung zwischen den elektrisch leitenden Schichten 16 an der Außenseite der Hohlfasermembranen 3 schafft.

Die Brennstoffzelle weist zwei elektrische Anschlusskontakte 18 und 19 auf, von denen der erste Anschlusskontakt 18 elektrisch mit der Schicht aus leitendem Material 14 in einem der beiden Endstücke 7, 8 des Gehäuses 1 und der zweite Anschlusskontakt 19 elektrisch mit der Schicht 16 aus leitfähigem Material in dem hohlzylindrischen Gehäuseteil 1A verbunden ist. An die elektrischen Anschlusskontakte 18, 19 können elektrische Leitungen 20, 21 angeschlossen werden, um einen Verbraucher an die Brennstoffzelle anschließen zu können. In Fig. 1 sind die elektrischen Anschlusskontakte 18 und 19 nur schematisch dargestellt.

Bei der Brennstoffzelle bildet die Schicht 16 an der Außenseite der Hohlfasermembranen 3 die Anode und die Schicht 14 an der Innenseite der Hohlfasermembranen 3 die Kathode. Dabei sind sämtliche Fasermembranen parallel geschaltet, wodurch die Leistungsdichte hoch ist.

Wenn zur Herstellung der Brennstoffzelle ein konventionelles Dialysator-Modul verwendet wird, sind die Schichten aus leitfähigem Material und Katalysatormaterial noch nicht vorhanden.

Da die Dialysatoren über Hohlfasermembranen verfügen, in denen Poren vorgesehen sind, ist es erforderlich, die Poren der Hohlfasern mit einem ionenleitenden Material zu Verfüllen. Die Verfüllung der Poren mit einem ionenleitenden Material kann durch Herstellung eines ausreichenden Transmembrandrucks erfolgen. Die Poren können mit einem mit Polysulfon benetzten Kleber verfüllt werden.

Aus fertigungstechnischen Gründen ist von Vorteil, wenn an der Wandung der Endstücke 1B und 1C sowie den angrenzenden Innenseiten der Trennwände 4, 5 sowohl eine Schicht aus einem Katalysatormaterial als auch eine Schicht aus einem leitfähigen Material aufgebracht wird, obwohl eine Schicht aus einem Katalysatormaterial in dem Einlass- und Auslass-Raum 7, 8 nicht erforderlich ist. Auch an den Innenseiten der Trennwände 4 und 5 sowie der Wandung des zylindrischen Gehäuseteils 1A ist eine Schicht aus einem Katalysatormaterial nicht erforderlich.

In einem ersten Arbeitsschritt wird eine mit einem Katalysatormaterial beladene Flüssigkeit an dem Einlass-Anschluss 9 zugeführt und an dem Auslass-Anschluss 10 abgeführt, wodurch der Einlass- und Auslass-Raum 7, 8 und die Innenseite der Hohlfasermembranen 3 beschichtet werden. In einem zweiten Arbeitsschritt wird eine mit einem leitfähigen Material beladene Flüssigkeit durch den Einlass-Raum 7, die Hohlfasermembranen 3 und den Auslass-Raum 8 gepumpt, so dass auf die Schicht 13 aus einem Katalysatormaterial eine Schicht 14 aus einem leitfähigen Material aufgebracht wird.

Die beiden Schichten 15, 16 aus Katalysatormaterial und leitfähigem Material werden auch in dem Zwischenraum 6 aufgebracht, in dem über den Einlass-Anschluss 12 eine mit einem Katalysatormaterial beladene Flüssigkeit bzw. eine mit einem leitfähigen Material beladene Flüssigkeit zugeführt und über den Auslass-Anschluss 11 abgeführt wird.

Die bekannten Dialysatoren weisen im Allgemeinen eine Membranfläche auf, die bei etwa 1,5 m² liegt. Mit einer derartigen Membranfläche ist es möglich, eine Brennstoffzelle zu schaffen, deren Leistung bei einem angenommenen Wirkungsgrad von nur 10 %, der in der Praxis aber höher liegen dürfte, zwischen 100 und 150 Watt liegt.

Zur Erzeugung elektrischer Energie wird der Brennstoffzelle über den Einlass-Anschluss 12 ein Methanol-Wasser-Gemisch zugeführt. Das in der Brennstoffzelle entstehende Kohlendioxid wird über den Auslass-Anschluss 11 abgeführt. Über den Einlass-Anschluss 9 wird der Brennstoffzelle Luft zugeführt. Das aus den Protonen und Elektronen mit dem Sauerstoff der Luft gebildete Wasser wird über den Auslass-Anschluss 10 abgeführt. Es ist aber auch möglich, die Strömungswege zu vertauschen, wobei die Verbrennungsluft nicht durch die Hohlfasermembranen geführt wird.

Die chemische Reaktion in der Brennstoffzelle wird durch folgende Gleichungen beschrieben.

| | |
|---|---|
| Anode | CH₃OH + H₂O → 6 H⁺ + 6 e⁻ + CO₂ |
| | Oxidation/Elektronenabgabe |
| Kathode | 3 O₂ + 12 H⁺+12 e⁻ → 6 H₂O |
| | Reduktion/Elektronenaufnahme |
| | |
| Gesamtreaktion | 2 CH₃OH + 3 O₂ → 4 H₂O + 2CO₂ |
| | Redoxreaktion/Zellreaktion |

## Patentansprüche

1. Brennstoffzelle mit
einem Gehäuse (1), in dem ein Bündel (2) aus Hohlfasermembranen (3) angeordnet ist,
einer ersten Trennwand (4), die den einen endseitigen Abschnitt (2A) des Bündels (2) aus Hohlfasermembranen (3) dicht umschließt,
einer zweiten Trennwand (5), die den anderen endseitigen Abschnitt (2B) des Bündels (2) aus Hohlfasermembranen (3) dicht umschließt,
die erste Trennwand (4) und die zweite Trennwand (5) das Gehäuse (1) in einen Einlassraum (7), der mit dem einen offenen Ende (3A) der Hohlfasermembranen (3) in Fluidverbindung steht, einen Auslassraum (8), der mit dem anderen offenen Ende (3B) der Hohlfasermembranen (3) in Fluidverbindung steht, und einen zwischen den Trennwänden (4, 5) liegenden Zwischenraum (6) trennen,
einem ersten Einlass-Anschluss (9) an dem Einlassraum (6) und einem ersten Auslass-Anschluss (10) an dem Auslassraum (8),
einem zweiten Einlass-Anschluss (12) an dem Zwischenraum (6) und einem zweiten Auslass-Anschluss (11) an dem Zwischenraum (6), wobei die Innenseite der Hohlfasermembranen (3) und die Außenseite der Hohlfasermembranen (3) mindestens eine Schicht (13, 15; 14, 16) umfassend ein Katalysatormaterial und ein elektrisch leitendes Material aufweisen, **dadurch gekennzeichnet, dass** auf die den Einlassraum (7) begrenzende Wandung des Gehäuses (1) und die den Einlassraum (7) begrenzende Oberfläche der ersten Trennwand (4) und die den Auslassraum (8) begrenzende Wandung des Gehäuses (1) und die den Auslassraum (8) begrenzende Oberfläche der zweiten Trennwand (5) eine Schicht (14) aus einem elektrisch leitenden Material aufgebracht ist,
auf die den Zwischenraum (6) begrenzende Wandung des Gehäuses (1) und die den Zwischenraum (6) begrenzende Oberfläche der ersten und zweiten Trennwand (4, 5) eine Schicht (16) aus einem elektrisch leitenden Material aufgebracht ist und
an dem Gehäuse (1) ein erster elektrischer Anschlusskontakt (18) ausgebildet ist, der mit der Schicht (14) aus einem elektrisch leitenden Material in dem Einlassraum (7) und Auslassraum (8) elektrisch verbunden ist, und ein zweiter elektrischer Anschlusskontakt (19) ausgebildet ist, der mit der Schicht (16) aus einem elektrisch leitenden Material in dem Zwischenraum (6) elektrisch verbunden ist.

2. Brennstoffzelle nach Anspruch 1, **dadurch gekennzeichnet, dass** unterhalb der Schicht (14) aus elektrisch leitenden Material in dem Einlassraum (7) und dem Auslassraum (8) und unterhalb der Schicht (16) aus elektrisch leitenden Material in dem Zwischenraum (6) eine Schicht (13, 15) aus einem Katalysatormaterial vorgesehen ist.

3. Brennstoffzelle nach Anspruch 1 oder 2, **dadurch gekennzeichnet, dass** das Gehäuse (1) ein zylindrisches Gehäuse ist und die erste und zweite Trennwand (4, 5) zylindrische Körper sind.

4. Brennstoffzelle nach einem der Ansprüche 1 bis 3, **dadurch gekennzeichnet, dass** die erste und zweite Trennwand (4, 5) aus einer Vergussmasse bestehen.

5. Brennstoffzelle nach einem der Ansprüche 1 bis 4, **dadurch gekennzeichnet, dass** das Katalysatormaterial Platin oder Palladium ist.

6. Brennstoffzelle nach einem der Ansprüche 1 bis 5, **dadurch gekennzeichnet, dass** die Schichtdicke der Schicht (13, 15) aus dem Katalysatormaterial zwischen 2 nm und 500 nm liegt.

7. Brennstoffzelle nach einem der Ansprüche 1 bis 6, **dadurch gekennzeichnet, dass** das leitfähige Material Kohlenstoff-Partikel oder Kohlenstoff-Fasern enthält.

8. Brennstoffzelle nach einem der Ansprüche 1 bis 7, **dadurch gekennzeichnet, dass** der Durchmesser der Hohlfasermembranen (3) zwischen 50 µm und 500 µm liegt.

9. Verfahren zur Herstellung einer Brennstoffzelle aus einem Hohlfasermembran-Modul, wobei das Hohlfasermembran-Modul aufweist:
ein Gehäuse (1), in dem ein Bündel (2) aus Hohlfasermembranen (3) angeordnet ist,
eine erste Trennwand (4), die den einen endseitigen Abschnitt (2A) des Bündels (2) aus Hohlfasermembranen (3) dicht umschließt,
eine zweite Trennwand (5), die den anderen endseitigen Abschnitt (2B) des Bündels (2) aus Hohlfasermembranen (3) dicht umschließt,
die erste Trennwand (4) und die zweite Trennwand (5) das Gehäuse (1) in einen Einlassraum (7), der mit dem einen offenen Ende (3A) der Hohlfasermembranen (3) in Fluidverbindung steht, einen Auslassraum (8), der mit dem anderen offenen Ende (3B) der Hohlfasermembranen (3) in Fluidverbindung steht, und einen zwischen den Trennwänden (4, 5) liegenden Zwischenraum (6) trennen,
einen ersten Einlass-Anschluss (9) an dem Einlassraum (6) und einem ersten Auslass-Anschluss (10) an dem Auslassraum (8),
einen zweiten Einlass-Anschluss (12) an dem Zwischenraum (6) und einem zweiten Auslass-Anschluss (11) an dem Zwischenraum (6), wobei die Innenseite der Hohlfasermembranen (3) und die Außenseite der Hohlfasermembranen (3) mit mindestens einer Schicht (13, 15; 14, 16) umfassend ein Katalysatormaterial und ein elektrisch leitendes Material beschichtet werden, **dadurch gekennzeichnet, dass** auf die den Einlassraum (7) begrenzende Wandung des Gehäuses (1) und die den Einlassraum (7) begrenzende Oberfläche der ersten Trennwand (4) und die den Auslassraum (8) begrenzende Wandung des Gehäuses (1) und die den Auslassraum (8) begrenzende Oberfläche der zweiten Trennwand (5) eine Schicht (14) aus einem elektrisch leitenden Material aufgebracht wird,
auf die den Zwischenraum (6) begrenzende Wandung des Gehäuses (1) und die den Zwischenraum (6) begrenzende Oberfläche der ersten und zweiten Trennwand (4, 5) eine Schicht (16) aus einem elektrisch leitenden Material aufgebracht wird und an dem Gehäuse (1) ein erster elektrischer Anschlusskontakt (18) ausgebildet wird, der mit der Schicht (14) aus einem elektrisch leitenden Material in dem Einlassraum (7) und Auslassraum (8) elektrisch verbunden ist, und ein zweiter elektrischer Anschlusskontakt (19) ausgebildet ist, der mit der Schicht (16) aus einem elektrisch leitenden Material in dem Zwischenraum (6) elektrisch verbunden ist.

10. Verfahren nach Anspruch 9, **dadurch gekennzeichnet, dass** in einem ersten Schritt eine mit Katalysatormaterial beladene Flüssigkeit und in einem zweiten Schritt eine mit einem elektrisch leitfähigen Material beladene Flüssigkeit durch den Einlassraum (7) und Auslassraum (8) und die Hohlfasermembranen (3) gepumpt wird, und in einem ersten Schritt eine mit Katalysatormaterial beladene Flüssigkeit und in einem zweiten Schritt eine mit einem elektrisch leitfähigen Material beladene Flüssigkeit durch den Zwischenraum (6) gepumpt wird.

11. Verfahren nach Anspruch 9 oder 10, **dadurch gekennzeichnet, dass** das Katalysatormaterial Platin oder Palladium ist.

12. Verfahren nach einem der Ansprüche 9 bis 11, **dadurch gekennzeichnet, dass** das Katalysatormaterial in einer Schichtdicke aufgebracht wird, die zwischen 2 nm und 500 nm liegt.

13. Verfahren nach einem der Ansprüche 9 bis 12, **dadurch gekennzeichnet, dass** das leitfähige Material Kohlenstoff-Partikel oder Kohlenstoff-Fasern enthält.

14. Verfahren nach einem der Ansprüche 8 bis 12, **dadurch gekennzeichnet, dass** der Durchmesser der Hohlfasermembranen (3) zwischen 50 µm und 500 µm liegt.

15. Verfahren nach einem der Ansprüche 9 bis 14, **dadurch gekennzeichnet, dass** das Hohlfasermembran-Modul ein Dialysator-Modul ist.

16. Verfahren nach Anspruch 15, **dadurch gekennzeichnet, dass** die Poren der Hohlfasermembranen (3) des Dialysator-Moduls mit einem ionenleitenden Material verfüllt werden.

## Claims

1. Fuel cell comprising
a housing (1) in which a bundle (2) of hollow fibre membranes (3) is arranged,
a first partition wall (4) which tightly encloses one end-face portion (2A) of the bundle (2) of hollow fibre membranes (3), and
a second partition wall (5) which tightly encloses the other end-face portion (2B) of the bundle (2) of hollow fibre membranes (3),
the first partition wall (4) and the second partition wall (5) dividing the housing into an inlet space (7), which is in a fluid connection with one open end (3A) of the hollow fibre membranes (3), an outlet space (8), which is in a fluid connection with the other open end (3B) of the hollow fibre membranes (3), and an intermediate space (6) which is positioned between the partition walls (4, 5),
a first inlet terminal (9) at the inlet space (6) and a first outlet terminal (10) at the outlet space (8),
a second inlet terminal (12) at the intermediate space (6) and a second outlet terminal (11) at the intermediate space (6),
wherein
the inner faces of the hollow fibre membranes (3) and the outer faces of the hollow fibre membranes (3) comprise at least one layer (13, 15; 14, 16) comprising a catalyst material and an electrically conductive material,
**characterized in that**
a layer (14) of an electrically conductive material is applied to the wall, delimiting the inlet space (7), of the housing (1), the surface, delimiting the inlet space (7), of the first partition wall (4), the wall, delimiting the outlet space (8), of the housing (1), and the surface, delimiting the outlet space (8), of the second partition wall (5),
a layer (16) of an electrically conductive material is applied to the wall, delimiting the intermediate space (6), of the housing (1) and the surface, delimiting the intermediate space (6), of the first and second partition wall (4, 5), and
a first electrical connection contact (18), which is electrically connected to the layer (14) of an electrically conductive material in the inlet space (7) and outlet space (8), and a second electrical connection contact (19), which is electrically connected to the layer (16) of an electrically conductive material in the intermediate space (6), are formed on the housing (1).

2. Fuel cell according to claim 1, **characterised in that** a layer (13, 15) of a catalyst material is provided under the layer (14) of electrically conductive material in the inlet space (7) and the outlet space (8) and under the layer (16) of electrically conductive material in the intermediate space (6).

3. Fuel cell according to either claim 1 or claim 2, **characterised in that** the housing (1) is a cylindrical housing and the first and second partition walls (4, 5) are cylindrical bodies.

4. Fuel cell according to any of claims 1 to 3, **characterised in that** the first and second partition wall (4, 5) consist of a sealing compound.

5. Fuel cell according to any of claims 1 to 4, **characterised in that** the catalyst material is platinum or palladium.

6. Fuel cell according to any of claims 1 to 5, **characterised in that** the layer thickness of the layer (13, 15) of the catalyst material is between 2 nm and 500 nm.

7. Fuel cell according to any of claims 1 to 6, **characterised in that** the conductive material contains carbon particles or carbon fibres.

8. Fuel cell according to any of claims 1 to 7, **characterised in that** the diameter of the hollow fibre membranes (3) is between 50 µm and 500 µm.

9. Method for manufacturing a fuel cell from a hollow fibre membrane module, the hollow fibre membrane module comprising:
a housing (1) in which a bundle (2) of hollow fibre membranes (3) is arranged,
a first partition wall (4) which tightly encloses one end-face portion (2A) of the bundle (2) of hollow fibre membranes (3),
a second partition wall (5) which tightly encloses the other end-face portion (2B) of the bundle (2) of hollow fibre membranes (3),
the first partition wall (4) and the second partition wall (5) dividing the housing into an inlet space (7), which is in a fluid connection with one open end (3A) of the hollow fibre membranes (3), an outlet space (8), which is in a fluid connection with the other open end (3B) of the hollow fibre membranes (3), and an intermediate space (6) which is positioned between the partition walls (4, 5),
a first inlet terminal (9) at the inlet space (6) and a first outlet terminal (10) at the outlet space (8),
a second inlet terminal (12) at the intermediate space (6) and a second outlet terminal (11) at the intermediate space (6),
wherein
the inner faces of the hollow fibre membranes (3) and the outer faces of the hollow fibre membranes (3) are coated with at least one layer (13, 15; 14, 16) comprising a catalyst material and an electrically conductive material,
**characterized in that**
a layer (14) of an electrically conductive material is applied to the wall, delimiting the inlet space (7), of the housing (1), the surface, delimiting the inlet space (7), of the first partition wall (4), the wall, delimiting the outlet space (8), of the housing (1), and the surface, delimiting the outlet space (8), of the second partition wall (5),
a layer (16) of an electrically conductive material is applied to the wall, delimiting the intermediate space (6), of the housing (1) and the surface, delimiting the intermediate space (6), of the first and second partition wall (4, 5), and
a first electrical connection contact (18), which is electrically connected to the layer (14) of an electrically conductive material in the inlet space (7) and outlet space (8), and a second electrical connection contact (19), which is electrically connected to the layer (16) of an electrically conductive material in the intermediate space (6), are formed on the housing (1).

10. Method according to claim 9, **characterised in that** a liquid containing a catalyst material, in a first step, and a liquid containing an electrically conductive material, in a second step, are pumped through the inlet space (7) and outlet space (8) and the hollow fibre membranes (3), and a liquid containing a catalyst material, in a first step, and a liquid containing an electrically conductive material, in a second step, are pumped through the intermediate space (6).

11. Method according to either claim 9 or claim 10, **characterised in that** the catalyst material is platinum or palladium.

12. Method according to any of claims 9 to 11, **characterised in that** the catalyst material is applied at a layer thickness of between 2 nm and 500 nm.

13. Method according to any of claims 9 to 12, **characterised in that** the conductive material contains carbon particles or carbon fibres.

14. Method according to any of claims 8 to 12, **characterised in that** the diameter of the hollow fibre membranes (3) is between 50 µm and 500 µm.

15. Method according to any of claims 9 to 14, **characterised in that** the hollow fibre membrane module is a dialyser module.

16. Method according to claim 15, **characterised in that** the pores of the hollow fibre membranes (3) of the dialyser module are filled with an ion-conducting material.

## Revendications

1. Pile à combustible comprenant
un boîtier (1), dans lequel est disposé un faisceau (2) composé de membranes à fibres creuses (3),
une première cloison de séparation (4), qui entoure de manière étanche une section (2A) située côté extrémité du faisceau (2) composé de membranes à fibres creuses (3),
une deuxième cloison de séparation (5), qui entoure de manière étanche l'autre section (2B) située côté extrémité du faisceau (2) composé de membranes à fibres creuses (3),
la première cloison de séparation (4) et la deuxième cloison de séparation (5) séparant le boîtier (1) en un espace d'admission (7), qui est en communication fluidique avec une extrémité (3A) ouverte des membranes à fibres creuses (3), et en un espace d'évacuation (8), qui en communication fluidique avec l'autre extrémité (3B) ouverte des membranes à fibres creuses (3), et un espace intermédiaire (6) se trouvant entre les cloisons de séparation (4, 5),
un premier raccord d'admission (9) au niveau de l'espace d'admission (6) et un premier raccord d'évacuation (10) au niveau de l'espace d'évacuation (8),
un deuxième raccord d'admission (12) au niveau de l'espace intermédiaire (6) et un deuxième raccord d'évacuation (11) au niveau de l'espace intermédiaire (6),
dans laquelle
le côté intérieur des membranes à fibres creuses (3) et le côté extérieur des membranes à fibres creuses (3) comprenant au moins une couche (13, 15 ; 14, 16) présentent un matériau catalyseur et un matériau électroconducteur,
**caractérisée en ce que**
est appliquée, sur la paroi, délimitant l'espace d'admission (7), du boîtier (1) et la surface, délimitant l'espace d'admission (7), de la première cloison de séparation (4) et sur la paroi, délimitant l'espace d'évacuation (8), du boîtier (1) et la surface, délimitant l'espace d'évacuation (8), de la deuxième cloison de séparation (5), une couche (14) composée d'un matériau électroconducteur,
est appliquée, sur la paroi, délimitant l'espace intermédiaire (6), du boîtier (1) et la surface, délimitant l'espace intermédiaire (6), de la première et de la deuxième cloison de séparation (4, 5), une couche (16) composée d'un matériau électroconducteur, et
est réalisé au niveau du boîtier (1), un premier contact de raccordement (18) électrique, qui est relié de manière électrique à la couche (14) composée d'un matériau électroconducteur dans l'espace d'admission (7) et dans l'espace d'évacuation (8), et un deuxième contact de raccordement (19) électrique est réalisé, lequel est relié de manière électrique à la couche (16) composée d'un matériau électroconducteur dans l'espace intermédiaire (6).

2. Pile à combustible selon la revendication 1, **caractérisée en ce qu'**est prévue, sous la couche (14) composée d'un matériau électroconducteur dans l'espace d'admission (7) et dans l'espace d'évacuation (8) et sous la couche (16) composée d'un matériau électroconducteur dans l'espace intermédiaire (6), une couche (13, 15) composée d'un matériau catalyseur.

3. Pile à combustible selon la revendication 1 ou 2, **caractérisée en ce que** le boîtier (1) est un boîtier cylindrique, et la première et la deuxième cloison de séparation (4, 5) sont des corps cylindriques.

4. Pile à combustible selon l'une quelconque des revendications 1 à 3, **caractérisée en ce que** la première et la deuxième cloison de séparation (4, 5) sont constituées d'une masse de scellement.

5. Pile à combustible selon l'une quelconque des revendications 1 à 4, **caractérisée en ce que** le matériau catalyseur est du platine ou du palladium.

6. Pile à combustible selon l'une quelconque des revendications 1 à 5, **caractérisée en ce que** l'épaisseur de couche de la couche (13, 15) composée du matériau catalyseur est comprise entre 2 nm et 500 nm.

7. Pile à combustible selon l'une quelconque des revendications 1 à 6, **caractérisée en ce que** le matériau conducteur contient des particules de carbone ou des fibres de carbone.

8. Pile à combustible selon l'une quelconque des revendications 1 à 7, **caractérisée en ce que** le diamètre des membranes à fibres creuses (3) est compris entre 50 µm et 500 µm.

9. Procédé servant à fabriquer une pile à combustible à partir d'un module à membrane à fibres creuses, dans lequel le module à membrane à fibres creuses présente :
un boîtier (1), dans lequel est disposé un faisceau (2) de membranes à fibres creuses (3),
une première cloison de séparation (4), qui entoure de manière étanche une section (2A) située côté extrémité du faisceau (2) composé de membranes à fibres creuses (3),
une deuxième cloison de séparation (5), qui entoure de manière étanche l'autre section (2B) située côté extrémité du faisceau (2) composé de membranes à fibres creuses (3),
la première cloison de séparation (4) et la deuxième cloison de séparation (5) séparant le boîtier (1) en un espace d'admission (7), qui est en communication fluidique avec une extrémité (3A) ouverte des membranes à fibres creuses (3), et en un espace d'évacuation (8), qui en communication fluidique avec l'autre extrémité (3B) ouverte des membranes à fibres creuse (3), et un espace intermédiaire (6) se trouvant entre les cloisons de séparation (4, 5),
un premier raccord d'admission (9) au niveau de l'espace d'admission (6) et un premier raccord d'évacuation (10) au niveau de l'espace d'évacuation (8),
un deuxième raccord d'admission (12) au niveau de l'espace intermédiaire (6) et un deuxième raccord d'évacuation (11) au niveau de l'espace intermédiaire (6),
dans laquelle
le côté intérieur des membranes à fibres creuses (3) et le côté extérieur des membranes à fibres creuses (3) comprenant au moins une couche (13, 15 ; 14, 16) sont revêtus d'un matériau catalyseur et d'un matériau électroconducteur,
**caractérisé en ce que**
est appliquée, sur la paroi, délimitant l'espace d'admission (7), du boîtier (1) et la surface, délimitant l'espace d'admission (7), de la première paroi (4) et sur la paroi, délimitant l'espace d'évacuation (8), du boîtier (1) et la surface, délimitant l'espace d'évacuation (8), de la deuxième cloison de séparation (5), une couche (14) composée d'un matériau électroconducteur,
est appliquée, sur la paroi, délimitant l'espace intermédiaire (6), du boîtier (1) et sur la surface, délimitant l'espace intermédiaire (6), de la première et de la deuxième cloison de séparation (4, 5), une couche (16) composée d'un matériau électroconducteur, et
est réalisé, au niveau du boîtier (1), un premier contact de raccordement (18) électrique,
qui est relié de manière électrique à la couche (14) composée d'un matériau électroconducteur dans l'espace d'admission (7) et dans l'espace d'évacuation (8), et un deuxième contact de raccordement (19) électrique est réalisé, lequel est relié de manière électrique à la couche (16) composée d'un matériau électroconducteur dans l'espace intermédiaire (6).

10. Procédé selon la revendication 9, **caractérisé en ce que** lors d'une première étape, un liquide chargé en matériau catalyseur et lors d'une deuxième étape un liquide chargé en un matériau électroconducteur sont pompés à travers l'espace d'admission (7) et l'espace d'évacuation (8) et les membranes à fibres creuses (3), et lors d'une première étape un liquide chargé en matériau catalyseur et lors d'une deuxième étape un liquide chargé en un matériau électroconducteur sont pompés à travers l'espace intermédiaire (6).

11. Procédé selon la revendication 9 ou 10, **caractérisé en ce que** le matériau catalyseur est du platine ou du palladium.

12. Procédé selon l'une quelconque des revendications 9 à 11, **caractérisé en ce que** le matériau catalyseur est appliqué en une épaisseur de couche, qui est comprise entre 2 nm et 500 nm.

13. Procédé selon l'une quelconque des revendications 9 à 12, **caractérisé en ce que** le matériau conducteur contient des particules de carbone ou des fibres de carbone.

14. Procédé selon l'une quelconque des revendications 8 à 12, **caractérisé en ce que** le diamètre des membranes à fibres creuses (3) est compris entre 50 µm et 500 µm.

15. Procédé selon l'une quelconque des revendications 9 à 14, **caractérisé en ce que** le module à membranes à fibres creuses est un module à dialyseur.

16. Procédé selon la revendication 15, **caractérisé en ce que** les pores des membranes à fibres creuses (3) du module à dialyseur sont remplis d'un matériau conducteur d'ions.
